Europäisches Patentamt

European Patent Office

Office européen des brevets

(19)

(11) Publication number: **0 062 355**
**B1**

(12) **EUROPEAN PATENT SPECIFICATION**

(45) Date of publication of patent specification: **20.08.86**

(21) Application number: **82102986.5**

(22) Date of filing: **07.04.82**

(51) Int. Cl.⁴: **C 21 D 1/42, H 05 B 6/02,**
**C 04 B 35/54**

(54) **Inductive heating device and methods employing a heating coil and workpieces heated thereby.**

(30) Priority: **07.04.81 JP 53365/82**
**07.04.81 JP 53366/82**

(43) Date of publication of application:
**13.10.82 Bulletin 82/41**

(45) Publication of the grant of the patent:
**20.08.86 Bulletin 86/34**

(84) Designated Contracting States:
**DE FR GB**

(56) References cited:
**DE-B-1 020 132**
**DE-B-1 085 979**
**DE-B-1 802 167**
**DE-B-2 459 576**
**DE-C- 835 032**
**GB-A-1 071 098**
**US-A-1 357 290**
**US-A-1 884 600**
**US-A-2 811 623**

**METALL, Vol. 12, No. 12, December 1958**
**Heidelberg G. RITZERFELD "Bauformen von**
**induktiven Erwärmungsanlagen mit**
**Netzfrequenz für Presslinge, insbesondere für**
**Rundbolzen" pages 1118 to 1123**

(73) Proprietor: **MITSUBISHI DENKI KABUSHIKI**
**KAISHA**
**2-3, Marunouchi 2-chome Chiyoda-ku**
**Tokyo 100 (JP)**
(73) Proprietor: **Toyo Tanso Co., Ltd.**
**No. 7-12, Takeshima 5-chome Nishi Yodogawa-**
**ku**
**Osaka-shi Osaka (JP)**

(72) Inventor: **Hoshikawa, Toru c/o Toyo Tanso Co.,**
**Ltd**
**Onohara Works No. 2181-2, Oaza Nakahime**
**Onohara-cho Mitoyo-gun Kagawa (JP)**
Inventor: **Osaki, Yoshihiko c/o Mitsubishi Denki**
**K.K.**
**Itami Works No. 80, Aza Nakano**
**Minami-Shimizu Amagasaki-shi Hyogo (JP)**

(74) Representative: **Lehn, Werner, Dipl.-Ing. et al**
**Hoffmann, Eitle & Partner Patentanwälte**
**Arabellastrasse 4 (Sternhaus)**
**D-8000 München 81 (DE)**

EP 0 062 355 B1

Courier Press, Leamington Spa, England.

## Description

The present invention relates to a graphitizing device for graphitizing an elongate carbon workpiece and comprising: a heating coil disposed to surround the workpiece with the longitudinal axis of the coil substantially coincident with the longitudinal central axis of the workpiece and with a clearance filled with heat-insulating material between the inner coil wall and the workpiece; and A.C. power source terminals for supply of A.C. to said coil.

The invention also relates to a method of graphitizing an elongate carbon workpiece in which the workpiece is placed within a heating coil with the longitudinal axis of the coil substantially coincident with the longitudinal central axis of the workpiece and with a clearance filled with heat-insulating material between the inner coil wall and the workpiece, and a source of A.C. power is connected to supply said coil.

Such device and method are known from US—A—1 884 600.

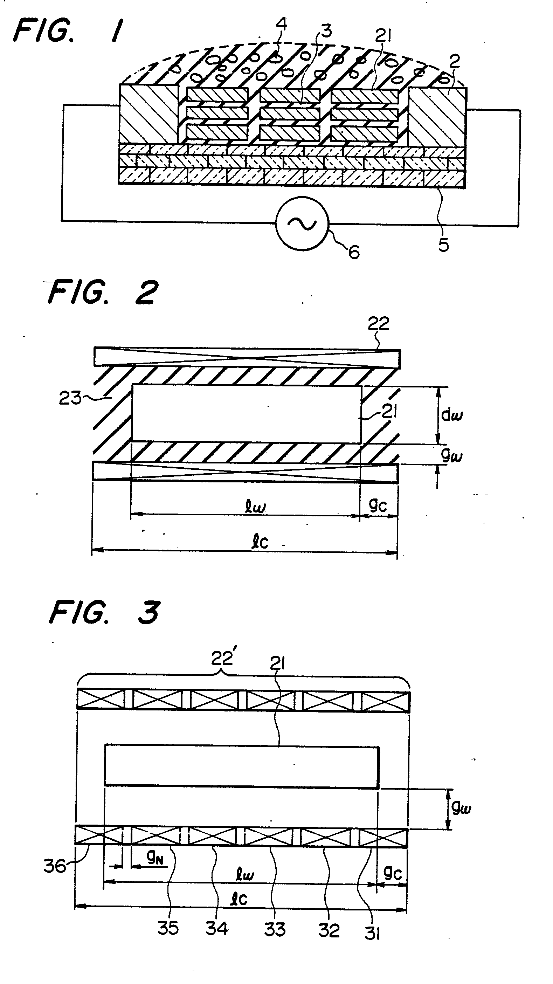

A conventional device for heating a carbon workpiece at rest is. shown in Fig. 1 of the accompanying drawings. In Fig. 1, electrodes 2 are placed on opposite sides of pieces of carbon 21. A power source 6 supplies electric current to the electrodes 2 and the pieces of carbon 21. The current is passed between the electrodes 2 and, therefore, the current is also passed through the pieces of carbon 21. A first thermal insulator 3, comprising carbon powder "A", is used to fill the spaces between the pieces of carbon 21, the carbon powder "A" facilitating the application of current to the pieces of carbon 21. A second thermal insulator 4, comprising carbon powder "B", is used to cover the top of the electrodes 2 and the pieces of carbon 21 to insulate thermally the top of the heating device. A refractory member 5 is placed below the electrodes 2, the pieces of carbon 21 and the carbon powder "A" to insulate thermally the bottom of the heating device.

In the conventional heating device, in order to supply current uniformly to the pieces of carbon 21, the first insulator 3, comprising the carbon powder "A", is used to fill the gaps between pieces of carbon 21. In this case, the spatial distribution of the current between the electrodes 2 varies, the amount of variation depending on how well the gaps between the pieces of carbon 21 are filled with the carbon powder "A". In addition, a long period of time is required for applying current to adequately heat the pieces of carbon 21. Such a lengthy current application time results in excessive heat loss through the electrodes 2. For these reasons, the ratio of electric power applied by the power source 6 to the sum of the surface areas of the pieces of carbon 21 to be heated (hereinafter referred to as "a surface power density") is, in general, set to about 3.5 W/cm².

It is true that US—A—1 884 600 proposed as long ago as 1932 a device and method for graphitizing carbon using induction heating. The elongate carbon workpiece is passed continuously through a heating zone where the workpiece is heated by an induction coil supplied with medium frequency current. It is stated in this disclosure that for efficient operation the magnetic induction should not extend beyond the centre of the charge.

As a result of this requirement, it was necessary to provide either means for moving the charge through the coil or means for moving the coil over the charge. Even with the use of pre-heaters to heat the charge to 1500°C, however, this old device was very slow. It was necessary to move the charge progressively and extremely slowly through the furnace in order to reach the necessary high temperature and to maintain the temperature for sufficient time.

As a result of these disadvantages, this known device is not a commercial proposition.

DE—B—1 802 167 relates only to a method of heating stationary plate-like workpieces having a width substantially greater than their thickness. Of course, the plates are not surrounded by heat insulating material. Heating takes place in an induction oven utilizing a plurality of individual coil units which may be connected in parallel.

However, no reference to graphitizing of carbon is made.

Furthermore, it is suggested that, without a complicated relationship between the dimensions and orientation of the workpiece and the orientation of the coil, uniform heating is not possible. In particular, the longitudinal axis of the workpiece should be perpendicular to the coil axis.

Although it is stated that the coil ends should extend beyond the workpiece by a certain distance (not defined), this distance is not related in any way to the internal coil-workpiece clearance or to the spacing between the coil units.

An object of the present invention is to provide a graphitizing device and method which can operate rapidly by induction heating whilst ensuring uniform heating of a carbon workpiece throughout its length including the end zones without sacrificing efficiency.

This object is achieved by a device and method as defined in the claims appended to this description.

According to one aspect of the invention there is provided a graphitizing device for graphitizing an elongate carbon workpiece and comprising: a heating coil disposed to surround the workpiece with the longitudinal axis of the coil substantially coincident with the longitudinal central axis of the workpiece and with a clearance $g_w$ filled with heat-insulating material between the inner coil wall and the workpiece; and A.C. power source terminals for supply of A.C. to said coil, characterised in that:

(a) said heating coil is divided into a plurality of substantially identical heating coil units;

(b) the coil units are connected in parallel to said power source terminals;

(c) the coil extends beyond the workpiece at each end thereof by a distance $g_c$ substantially equal to clearance $g_w$.

According to another aspect of the invention, there is provided a method of graphitizing an elongate carbon workpiece in which the workpiece is placed within a heating coil with the longitudinal axis of the coil substantially coincident with the longitudinal central axis of the workpiece and with a clearance $g_w$ between the inner coil wall and the workpiece, and a source of A.C. power is connected to supply said coil characterised in that:

(a) a plurality of substantially identical heating coil units are provided to form said heating coil;

(b) the source of A.C. power is applied in parallel to all individual coil units;

(c) the workpiece is positioned within the coil so that the coil extends beyond the workpiece at each end thereof by a distance $G_c$ substantially equal to clearance $g_w$.

According to a further aspect of the invention, there is provided a workpiece heated in accordance with the device of the invention.

As current flows into the heating coil, an eddy current is induced in the peripheral portion of the workpiece to be heated, thus heating the workpiece. The heat insulating layer reduces the dissipation of heat from the workpiece being heated and also prevents the surface of the workpiece from oxidizing.

Since the heating coil comprises a plurality of heating coil units connected to a power source in parallel, the outermost heating coil units may be connected to a voltage varying means so that the current in these outermost units can be varied. Using the device so constructed, the workpiece can be heated to a temperature of 2,200°C or higher, in a short period of time, with a high surface power density. In addition, the length of an insufficient heating temperature zone between the plurality of heating coil units, attributable to an end magnetic flux effect, is negligible.

For a better understanding of the invention, and to show how the same may be carried into effect, reference will now be made, by way of example, to the accompanying drawings, in which:

Fig. 1 is a sectional view of a conventional inductive heating device for heating a workpiece at rest;

Fig. 2 is a sectional view showing a schematic explanatory diagram; and

Fig. 3 is a sectional view showing an embodiment for the present invention.

Reference will be made to Figure 2 for explanatory purposes.

As shown in Figure 2, an inductive heating coil 22 is arranged around a workpiece 21 at rest to be heated, the workpiece being made of carbon. The space between the coil 22 and the workpiece 21 is filled with a heat insulating material 23, such as carbon powder "B". The heating coil 22 is then connected to an AC power source (not shown).

The inductive heating coil 22 surrounds the workpiece 21. As current flows into the heating coil 22, an eddy current is induced in the peripheral portion of the workpiece to be heated. The current permeation depth of the eddy current varies, depending on the geometry involved and the amount of current flowing in the heating coil 22. The core of the workpiece 21 is heated by the conduction of heat from the peripheral portion of the workpiece.

In order to prevent the dissipation of heat from the peripheral portion of the workpiece and to prevent the peripheral portion of the workpiece 21 from oxidizing, the workpiece 21 is surrounded by the heat insulating material 23, such as carbon powder "B".

In the device of Fig. 2, when the workpiece at rest is subjected to inductive heating, an end magnetic flow effect makes it difficult to heat the end portion of the workpiece 21 to ensure that the workpiece 21 is heated uniformly as desired. In order to improve the heating of the end portions of the workpiece 21, the distance gc between the end of the heating coil 22 and the end of the workpiece 21, and the clearance $g_w$ between the heating coil 22 and the workpiece 21 may be adjusted.

By experiment, it has been discovered that if the distance $g_c$ is larger than the clearance $g_w$, as illustrated in Figure 2, uniform heating of the workpiece at rest can be achieved using this device. However, if the clearance $g_w$ is large, then it is disadvantageously necessary to use a heating coil, the total length $l_c$ of which is much larger than the total length $l_w$ of the workpiece. This leads to an excessively long heating zone with a narrow workpiece.

Fig. 3 shows an embodiment of the present invention wherein the length of the heating zone can be considerably reduced. Referring to Fig. 3, a heating coil 22' is disposed so as to surround a workpiece 21 to be heated uniformly, similar to the device of Fig. 2. However, in the device of Fig. 3, the heating coil 22' is divided into a plurality of smaller heating coil units 31, 32, 33, 34, 35 and 36, which are connected in parallel to an AC power source (not shown).

The parallel-connected heating coil units 31 through 36, shown in Fig. 3, have the same voltage applied across their terminals. However, currents $I_{31}$ through $I_{36}$, flowing in heating coils 31 through 36, are determined by the impedances $Z_{31}$ through $Z_{36}$ of the various heating coils, respectively. When the reactances ($X_{31}, X_{32}$ ... and $X_{36}$) and the resistances ($R_{31}, R_{32}, ... R_{36}$) of the various coil impedances are compared with each other, in general, the reactances are several times higher than the resistances in inductive heating. Therefore, the comparison of the coil impedances mentioned above can be replaced readily by a comparison of the coil reactances. The magnetic resistances $R_{31}$ and $R_{36}$ of the outermost heating coils are much higher than those of the remaining heating coils because their mean flux path is longer. Since $L \propto 1/R$ and $X = wL$ are held by electromagnetic theory, the reactances of the outermost heating coils are lower than those of the remaining heating coils. Thus, the currents in the heating coils 31 and 36 at both ends of the coil 22' are higher than the currents in the other heating coils 22, 23 and 24. Accordingly, the magnetic flux is increased at both the end coils 31 through 36, thereby reducing the length of the insufficient heating temperature zone between coils 31—36 caused by the end magnetic flux effect.

As a result, distance $g_c$ may be set equal to, or even slightly less than, the distance $g_w$ as shown in Figure 3.

In order to further reduce the length of the insufficient heating zone, a voltage varying means may be connected to the two end coils 31 and 36, or a transformer may be connected thereto, so that the current flowing in these end coils 31 and 36 can be further varied by varying the voltages applied across the terminals of these end coils to further increase the magnetic created thereby.

The above-described embodiments of the present invention for heating a carbon workpiece at rest are applicable to a workpiece which should be subjected to heat-treatment at a high temperature (especially 1,500°C or higher), while oxidation of the workpiece due to a high heating temperature is prevented.

Heretofore, when heating a workpiece at rest, the division type heating coil, in general, has not been employed because the workpiece is heated at different temperatures at the junctions between the heating coils. However, in the case where high temperatures must be used, as in the case of graphitization inductive heating, the clearance gw is set to a large value by taking the heat insulation characteristic and the refractory characteristic into consideration and, therefore, the junction $g_N$ can be maintained much smaller than the clearance $g_w$. Then, the effect of the junctions $g_N$ of the heating coils can be disregarded.

According to the present invention, by providing a plurality of heating coils connected to a power source in parallel and incorporating voltage varying means for the outermost coils, the coil end magnetic flux effect is increased and, therefore, a workpiece can be heated uniformly while keeping the overall length of the device as small as possible.

### Claims

1. A graphitizing device for graphitizing an elongate carbon workpiece (21) and comprising: a heating coil (22) disposed to surround the workpiece (21) with the longitudinal axis of the coil (22) substantially coincident with the longitudinal central axis of the workpiece (21) and with a clearance $g_w$ filled with heat-insulating material between the inner coil wall and the workpiece (21); and A.C. power source terminals for supply of A.C. to said coil (22), characterised in that:

(a) said heating coil (22) is divided into a plurality of substantially identical heating coil units (31 to 36);

(b) the coil units (31 to 36) are connected in parallel to said power source terminals;

(c) the coil (22) extends beyond the workpiece (21) at each end thereof by a distance $g_c$ substantially equal to clearance $g_w$.

2. A device as claimed in claim 1 further characterised by voltage varying means connected to outermost ones (31, 36) of said plurality of heating coil units (31 to 36) for varying a voltage applied across the terminals of said outermost ones (31, 36) of said heating coil units (31 to 36).

3. A device as claimed in claim 2 characterised in that said voltage varying means comprises a transformer.

4. A device as claimed in any one of the preceding claims characterised in that the distance $g_n$ between adjacent heating coil units (31, 59 36) is maintained smaller than the clearance $g_w$ between said workpiece (21) and said heating coil units (31 to 36).

5. A method of graphitizing an elongate carbon workpiece (21) in which the workpiece (21) is placed within a heating coil (22) with the longitudinal axis of the coil (22) substantially coincident with the longitudinal central axis of the workpiece (21) and with a clearance $g_w$ filled with heat-insulating material between the inner coil wall and the workpiece (21), and a source of A.C. power is connected to supply said coil (22) characterised in that:

(a) a plurality of substantially identical heating coil units (31 to 36) are provided to form said heating coil (22);

(b) the source of A.C. power is applied in parallel to all individual coil units (31 to 36);

(c) the workpiece (21) is positioned within the coil (22) so that the coil (22) extends beyond the workpiece (21) at each end thereof by a distance $(g_c)$ substantially equal to clearance $g_w$.

### Revendications

1. Un dispositif de graphitisation pour graphiter une pièce à usiner allongée en carbone (21), et comprenant: une bobine de chauffage (22) disposée de façon à entourer la pièce à usiner (21) avec l'axe longitudinal de la bobine (22) coïncidant substantiellement avec l'axe longitudinal central de la pièce à usiner (21) et avec un espacement $g_w$ rempli de matériau isolant entre la paroi interne de la bobine et la pièce à usiner (21); et des bornes d'alimentation électrique en courant alternatif pour alimenter ladite bobine (22) en courant alternatif, caractérisé en ce que:

(a) ladite bobine de chauffage (22) est divisée en plusieurs éléments de bobines de chauffage (31 à 36) substantiellement identiques;

(b) les éléments de bobines (31 à 36) sont branchés en parallèle aux dites bornes d'alimentation électrique;

(c) la bobine (22) dépasse de chaque extrémité de la pièce à usiner (21) d'une longueur $g_c$ substantiellement égale à l'espacement $g_w$.

2. Un dispositif tel que revendiqué à la revendication 1 caractérisé de plus par un variateur de tension branché à l'une des éléments extrémes

(31, 36) dudit ensemble d'éléments de bobine de chauffage (31 à 36) pour modifier la tension appliquée aux bornes desdits éléments extrémes (31, 36) dudit ensemble d'éléments de bobine de chauffage (31 à 36).

3. Un dispositif tel que revendiqué à la revendication 2 caractérisé en ce que ledit variateur de tension comprend un transformateur.

4. Un dispositif selon l'une quelconque des revendications précédentes, caractérisé en ce que la longueur $g_N$ entre les éléments de bobine de chauffage adjacents (31 à 36) reste inférieure à l'espacement $g_w$ entre ladite pièce à usiner (21) et lesdits éléments de bobine de chauffage (31 à 36).

5. Une méthode pour graphiter une pièce à usiner allongée en carbone (21) dans laquelle la pièce à usiner (21) est placée dans une bobine de chauffage (22) avec l'axe longitudinal de la bobine (22) coïncidant substantiellement avec l'axe longitudinal central de la pièce à usiner (21) et avec un espacement $g_w$ rempli de matériau isolant entre la paroi interne de la bobine et la pièce à usiner (21), et une alimentation électrique en courant alternatif branchée pour alimenter ladite bobine (22), caractérisée en ce que:

(a) un ensemble d'éléments de bobine de chauffage substantiellement identiques (31 à 36) forment ladite bobine (22);

(b) l'alimentation électrique en courant alternatif est appliquée en parallèle à tous les éléments individuels de bobine (31 à 36);

(c) la pièce à usiner (21) est placée à côté de la bobine (22) de façon à ce que la bobine (22) dépasse de chaque extrémité de la pièce à usiner (21) d'une longueur $g_c$ substantiellement égale à l'espacement $g_w$.

**Patentansprüche**

1. Graphitiervorrichtung zum Graphitieren eines länglichen Kohlenstoffwerkstückes (21) und umfassend: eine Erwärmungsspule (22), die so angeordnet ist, daß sie das Werkstück (21) umgibt, wobei die Längsachse der Spule (22) im wesentlichen mit der Längszentralachse des Werkstückes (21) übereinstimmt und wobei ein Freiraum $g_w$ wärmeisolierendem Material zwischen der inneren Spulenwand und dem Werkstück (21) gefüllt ist, und Wechselstromleistungsquellenanschlüsse zum Anlegen eines Wechselstroms an die Spule (22), dadurch gekennzeichnet, daß

a) die Erwärmungsspule (22) in eine Vielsahl von im wesentlichen identischen Erwärmungsspuleneinheiten (31—36) unterteilt ist,

b) die Spuleneinheiten (31—36) parallel zu den Leistungsquellenanschlüssen angeschlossen sind,

c) sich die Spule (22) über das Werkstück (21) hinaus an jedem Ende um einen Abstand $g_c$ erstreckt, welcher im wesentlichen gleich dem Freiraum bzw. Spiel $g_w$ ist.

2. Vorrichtung nach Anspruch 1, außerdem gekennzeichnet durch eine Spanngsänderungseinrichtung, welche mit den äußersten (31, 36) der Vielzahl der Erwärmungsspuleneinheiten (31—36) verbunden ist, um eine an die Anschlüsse der äußersten (31, 36) der Erwärmungsspuleneinheiten (31—36) angelegte Spannung zu ändern.

3. Vorrichtung nach Anspruch 2, dadurch gekennzeichnet, daß die Spannungsänderungseinrichtung einen Wandler bzw. Transformator umfaßt.

4. Vorrichtung nach einem der vorhergehenden Ansprüche, dadurch gekennzeichnet, daß der Abstand $g_n$ zwischen benachbarten Erwärmungsspuleneinheiten (31—36) kleiner gehalten ist als der Freiraum bzw. Spielabstand $g_w$ zwischen dem Werkstück (21) und den Erwärmungsspuleneinheiten (31—36).

5. Verfahren zum Graphitieren eines länglichen Kohlenstoffwerkstückes (21), bei dem das Werkstück (21) innerhalb einer Erwärmungsspule (22) plaziert wird, wobei die Längsachse der Spule (22) im wesentlichen mit der Längszentralachse des Werkstückes (21) übereinstimmt und wobei ein Freiraum bzw. Spiel $g_w$ mit wärmeisolierendem Material zwischen der Innenspulenwand und dem Werkstück (21) gefüllt ist, und wobei eine Wechselstromleistungsquelle angeschlossen wird, um die Spule (22) zu versorgen, dadurch gekennzeichnet, daß

a) eine Vielzahl von im wesentlichen identischen Erwärmungsspuleneinheiten (31—36) vorgesehen ist, um die Erwärmungsspule (22) zu bilden,

b) die Wechselstromleistungsquelle parallel zu allen einzelnen Spuleneinheiten (31—36) angeschlossen wird,

c) das Werkstück (21) innerhalb der Spule (22) positioniert ist, so daß sich die Spule (22) über das Werkstück (21) an jedem Ende hinaus um einen Abstand $g_c$ erstreckt, welcher im wesentlichen gleich dem Freiraum bzw. Spiel $g_w$ ist.

*FIG. 1*

*FIG. 2*

*FIG. 3*

1